# EUROPEAN PATENT SPECIFICATION

(11) **EP 4 330 307 B1**
(45) Date of publication and mention of the grant of the patent: **30.07.2025**
(21) Application number: 22725877.9
(22) Date of filing: 27.04.2022
(51) Int. Cl.: C08G 18/50, C08G 18/52, C08G 18/64, C08G 18/75, C08G 18/80

(54) **ISOCYANATE-FUNCTIONALIZED ORGANOSILANES AS ADHESION PROMOTERS IN SEALANT AND PRIMER COMPOSITIONS**
ISOCYANAT-FUNKTIONALISIERTE ORGANOSILANE ALS HAFTVERMITTLER IN DICHTUNGS- UND PRIMERZUSAMMENSETZUNGEN
ORGANOSILANES À FONCTIONNEMENT ISOCYANATE COMME PROMOTEURS D'ADHÉSION DANS LES COMPOSITIONS DE SEALANT ET D'APPRÊT

(30) Priority: 28.04.2021 EP 21170836
(43) Date of publication of application: 06.03.2024
(73) Proprietor: Chemetall GmbH, 60487 Frankfurt (DE)
(72) Inventor: DEMPFLE, Jonas, 60487 Frankfurt (DE); KOVALENKO, Alexander, 60487 Frankfurt (DE)
(74) Representative: BASF IP Association
(86) International application number: PCT/EP2022/061238
(87) International publication number: WO 2022/229275

(56) References cited:
- JP-A- 2018 162 387
- US-A1- 2015 259 461
- US-A1- 2017 121 450

## Description

The present invention relates to a method of sealing a substrate optionally comprising a step (1) of applying a primer composition, and necessarily comprising a step (2) of applying a sealant composition, which is obtainable by mixing components (A) and (B) of a 2K-sealing system with each other, comprising in (A) a thiol groups containing polymeric constituent (a1) and in (B) a constituent (b), which is suitable for hardening the sealant composition by at least partially inducing a chemical transformation of the thiol groups of constituent (a1), wherein an organosilane constituent comprising at least one hydrolyzable group X, at least one NCO-group and a spacer unit comprising a moiety MS comprising in turn at least one sulfur atom and being positioned between X and the NCO-group, is at least present - when step is not performed - as constituent (a2) in the sealant composition applied in step (2) or is - when step (1) is performed - at least present as a constituent in the primer composition applied in step (1), a sealed substrate obtainable by this method, a use of said organosilane constituent for adhesion enhancement, the sealant composition used in step (2), the 2K sealing system as such, and to the organosilane constituent per se.

### Background of the invention

Sealants are used for a wide range of applications. They are e.g. relevant to the aerospace sector, but are also widely used in the automotive sector. Sealants are further used for sealing construction elements, connection of metal sheets, for example, to existing structures, such as segments of an airplane and/or for corrosion protection in places, where for example, in the region of holes, the corrosion protection layers of the metallic elements are damaged or removed. They may also exert a temporary carrying function, for example during transportation of structures to be mounted, which have to be subsequently provided with permanent supporting connection elements.

Silanes, in particular organosilanes, are known to work as adhesion promoter for various substrates, especially with polar surfaces like metals and glass, but also for ceramics and polymers. Due to their vast compatibility to many chemical systems, they can be used in various different materials including sealant materials. Compared to other chemically different adhesion promoters like e.g. phenolic resins or polyolefins, silanes usually do not significantly influence the pH environment within the material they are utilized in, which becomes especially important for applications, where ambient conditions such as a constant pH environment are critical for the curing properties of the material, which is, e.g. the case for polysulfide and/or polythioether based sealants. An additional advantage of the use of silanes as adhesion promoters in such materials is that they can be used along with other adhesion promoters such as e.g. polyolefins and/or organometallic compounds like titanates. Usually, the silanes used for this purpose bear an aliphatic and/or aromatic spacer (linker) attached to a functional group like an amino, thiol, hydroxy, or epoxide group, depending on the system the silane is to be used in.

EP 3 023 429 A1 discloses specific cycloaliphatic OH-functional silanes for use as adhesion promoters and crosslinking agents. CN 104 937 054 A discloses an adhesion improving agent, which is a reaction product of an isocyanate functional silane and a further silane bearing a functional group reactive towards isocyanate groups. WO 2006/050915 A1 discloses a method of coating metallic surfaces that makes use of an aqueous composition, which contains at least one kind of Sicontaining constituents such as an organosilane. US 2019/0119539 A1 discloses compositions comprising a combination of different silanes such as a combination of an aminohydrocarbyl alkoxy silane, an alkenyl alkoxy silane and a mercaptohydrocarbyl alkoxy silane. The composition is useful as water-based primer.

WO 03/054049 A1 relates to isocyanate functional silanes, which have been prepared from a reaction of e.g. amino-functional organosilanes and low volatile polyisocyanates, for use as adhesion promoters in polyurethane compositions. WO 02/051954 A2 relates to a 2K coating composition containing a compound containing alkoxy silane groups as well as succinyl urea groups.

However, the sealant systems known in the prior art not always provide sufficient adhesion properties and the silanes known in the prior art not always provide sufficient adhesion promoting properties, in particular in the field of sealants for the aircraft industry and in sealant compositions comprising polymers with thiol groups such as polysulfide and/or polythioether based sealant compositions, in particular not for a variety of different substrates. Further, the silanes known from the prior art often lead to only comparably poor processing properties when incorporated into sealant compositions containing the aforementioned polymers with thiol groups, especially as far as an undesired viscosity change such as an undesired drop of viscosity over storage time is concerned. These disadvantageous properties are in particular often observed, when amino-group containing silanes as such or silanes derived from amino-group containing precursor silanes are used such as e.g. silanes disclosed in WO 03/054049 A1 and WO 02/051954 A2.

US 2015/259461 A1 relates to silane functional polyurethanes and discloses a process for preparing such polyurethanes containing silane groups. US 2017/121450 A1 relates to thioallophanate polyisocyanates containing silane groups and to a process for preparing them as well as to coating compositions comprising these polyisocyanates. JP 2018/162387 A relates to curable compositions comprising a room temperature stable curable resin, which may comprise silyl groups, and surface treated barium sulfate, which have high strength and excellent weather and chemical resistance.

It is further known to functionalize polymers with silanes, e.g. from US 2016/0319068 A1, EP 3 293 217 A1 and DE 198 21 356 A1 as well as US 2018/112026 A1: US 2016/0319068 A1 discloses polyester polyols comprising esterified units, which in turn have been modified with an amino functional silane. These polymers can be used as adhesion promoters for urethane systems. EP 3 293 217 A1 discloses silane-modified copolymers as adhesion improvers. US 2018/112026 A1 discloses a modified polyisocyanate obtainable by reacting a polyisocyanate based on 1,5-diisocyanatopentan and an organosilane such as an amino functional organosilane. DE 198 21 356 A1 discloses the preparation and use of a silane-modified butylrubber, wherein a mercapto functional silane is used for this purpose. However, the use of such modified polymers disclosed in these references necessarily requires a pre-modification step of the polymers prior to their use in materials such as sealants, which is not desired at least from an economical point of view. In addition, a prior modification of the polymers limits the flexibility of the end user with regard to degrees of freedom when formulating material compositions. As far as DE 198 21 356 A1 is concerned, the rubbers/polymers disclosed therein are additionally not suitable for use as a sealant, in particular not as aircraft sealants, at least since they show an only poor resistance to non-polar solvents like mineral oil-based fuels. This is in particular disadvantageous for sealants used for sealing the interior of fuel tanks of aircrafts.

Thus, there is a demand for sealing systems, sealing compositions and for a method of sealing of substrates, which do not exhibit the aforementioned disadvantages, in particular, when the substrates are substrates used in the aircraft industry such as fuel tanks. In particular, there is a demand for respective sealing systems and compositions containing thiol groups containing polymers, which provide excellent adhesion properties to a variety of different substrates and surfaces, and for universally utilizable adhesion promoters to be suitable for such systems and compositions, which allow an easy and economically advantageous incorporation into these systems and compositions without imparting their processing properties.

### Problem

It has been therefore an object underlying the present invention to provide sealing systems and sealing compositions containing thiol groups containing polymers and a method of sealing of substrates making use of these systems and compositions, in particular, when the substrates are substrates used in the aircraft industry such as fuel tanks, which not only provide excellent adhesion properties to a variety of different substrates and surfaces, but which additionally allow to make use of a universally utilizable adhesion promoter suitable for such systems and compositions, wherein said adhesion promoter allows an easy and economically advantageous incorporation into these systems and compositions and does not show any disadvantages as far as the processibility of these systems and compositions are concerned. At the same time the sealed substrates such as sealed interiors of fuel tanks ought to exhibit an excellent resistance to liquid media, in particular towards fuels.

### Solution

This objective has been solved by the subject-matter of the claims of the present application as well as by the preferred embodiments thereof disclosed in this specification, i.e. by the subject matter described herein.

A first subject-matter of the present invention is a method of sealing an optionally pre-coated substrate comprising at least step (2) and optionally also step (1), namely
(1) optionally applying a primer composition at least in portion onto a surface of an optionally pre-coated substrate to form a primer film at least in portion on said surface,
(2) applying a sealant composition at least in portion onto a surface of an optionally pre-coated substrate in case optional step (1) is not performed or onto the primer film in case optional step (1) is performed,
   wherein the sealant composition is different from the primer composition optionally applied in step (1) and is obtainable by mixing the components of a sealing system with each other, said sealing system being a two-component (2K) sealing system comprising two components (A) and (B) being separate from each other,
      wherein component (A) of the sealing system comprises at least one polymeric constituent (a1) containing two or more thiol groups selected from polyether, polythioether, polysulfide, polythioether-sulfide constituents and mixtures thereof, and
      wherein component (B) of the sealing system comprises at least one constituent (b), which is suitable for hardening the sealant composition by at least partially inducing a chemical transformation of the two or more thiol groups of constituent (a1),
   characterized in that at least one organosilane constituent, which contains
      (i) at least one hydrolyzable group X,
      (ii) at least one isocyanate group, and
      (iii) a spacer unit positioned between the at least one hydrolyzable group X and the at least one isocyanate group, wherein said spacer unit comprises at least one moiety MS, which comprises at least one sulfur atom,
   is at least present - when optional step (1) is not performed - as constituent (a2) in component (A) of the sealing system used for preparing the sealant composition applied in step (2) or is - when step (1) is performed - at least present as a constituent in the primer composition applied in step (1).

A further subject-matter of the present invention is a sealed substrate, obtainable by the inventive method.

A further subject-matter of the present invention is a use of an organosilane constituent as defined hereinbefore and/or hereinafter when incorporated into a primer composition as defined in hereinbefore and/or hereinafter such as into a primer composition used in step (1) of the inventive method or into a sealant composition as defined hereinbefore and/or hereinafter such as into a sealant composition used in step (2) of the inventive method, in particular into component (A) of a sealing system used for preparing said sealant composition, for enhancing the adhesion of the primer composition or of the sealant composition to an optionally pre-coated substrate once applied to at least a portion of its surface.

A further subject-matter of the present invention is a sealant composition as defined hereinbefore and hereinafter, which is obtainable by mixing components (A) and (B) of a sealing system as defined hereinbefore and/or hereinafter with each other, wherein component (A) of said sealing system comprises the at least one organosilane constituent as defined hereinbefore and/or hereinafter.

A further subject-matter of the present invention is a two-component (2K) sealing system comprising components (A) and (B) as defined hereinbefore and/or hereinafter, being separate from each other, wherein component (A) of said sealing system comprises the at least one organosilane constituent as defined hereinbefore and/or hereinafter.

A further subject-matter of the present invention is an organosilane constituent as defined hereinbefore and/or hereinafter, optionally being incorporated into a primer composition as defined hereinbefore and/or hereinafter. A further subject-matter of the present invention is thus also a primer composition as defined hereinbefore and/or hereinafter comprising at least an organosilane constituent as defined hereinbefore and/or hereinafter.

It has been in particular surprisingly found that the aforementioned organosilane constituent represents a universally utilizable adhesion promoter when incorporated into the sealant and/or primer compositions, in particular when used in the inventive method. It has been found that said adhesion promoter can be easily incorporated into various sealant compositions and can also be easily incorporated into suitable primer compositions to be applied before the actual sealant composition is applied to the surface of the substrate. It has been found that an excellent adhesion to various substrates including metal substrates and pre-coated substrates such as metal substrates bearing at least one organic coating layer can be achieved and that the adhesion promoter can be effectively chemically incorporated into the formed polymer matrices and networks after application. It has been further surprisingly found that the organosilane constituent functions as a linker between the surface of the substrate and the applied primer/sealant.

Further, it has been in particular surprisingly found that the one or more hydrolyzable groups X of the organosilane constituent such as alkoxy groups/silyl ether groups mediate adhesion to the surface the organosilane constituent is applied to, in particular by reacting with OH-groups in a condensation reaction, whereas at the same time, the at least one NCO-group of the organosilane constituent can react with the thiol groups of constituent (a1) of the sealant composition. In particular, it has been found that a significant improvement of adhesion in the used sealant and/or primer material is a result of the at least one moiety MS present in the spacer unit of the organosilane constituent. It is assumed, that the presence of the at least one moiety MS has an additional adhesion promoting effect, which is based on the formation of hydrogen bonds. It has been found that the use of conventional organosilanes such as (3-glycidyloxypropyl)trimethoxysilane and (3-mercaptopropyl)-trimethoxysilane as well as the use of organosilanes that do not contain the at least one sulfur atom containing moiety MS such as organosilanes prepared from diisocyanates and an amino-functional silane precursor such as bis[3-(trimethoxysilyl)propyl]amine do not have the desired effect of increasing the adhesion significantly.

Moreover, it has been surprisingly found that the aforementioned organosilane constituent offers a high degree of flexibility and high degrees of freedom for formulating the sealant and primer compositions.

In particular, no pre-modification step of modifying any polymer components of the sealant compositions is necessary in order to improve adhesion, but the aforementioned organosilane constituent can instead be simply incorporated into various sealant compositions as such.

Further, it has been surprisingly found that sealant and primer compositions comprising the aforementioned organosilane constituent are in particular utilizable in the aircraft and aerospace field, e.g. as aircraft sealants, in particular for sealing the interior of fuel tanks of aircrafts, as the sealed corresponding substrates exhibit an excellent resistance to liquid media such as organic solvents and fuels, in particular non-polar solvents like mineral oil-based fuels.

Additionally, it has been surprisingly found that sealant and primer compositions comprising the aforementioned organosilane constituent are able to provide sealed substrates exhibiting excellent physical-mechanical properties such as tensile strength.

Finally, it has been surprisingly found that sealant and primer compositions comprising the aforementioned organosilane constituent show excellent processing properties and, in particular excellent viscosity properties as no undesired viscosity change such as an undesired drop of viscosity is observed over storage time.

### Detailed description of the invention

The term "comprising" in the sense of the present invention, in connection for example with sealant composition, preferably has the meaning of "consisting of". With regard, e.g., to the sealant composition it is possible - in addition to all mandatory constituents present therein - for one or more of the further optional constituents identified hereinafter to be also included therein. All constituents may in each case be present in their preferred embodiments as identified below.

The proportions and amounts in wt.-% (% by weight) of any of the constituents given hereinafter, which are present in each of the components of the sealing system add up to 100 wt.-%, based in each case on the total weight of the respective component. Similarly, the proportions and amounts in wt.-% (% by weight) of any of the constituents given hereinafter, which are present in the sealant or primer composition add up to 100 wt.-%, based in each case on the total weight of the respective composition.

### Method of sealing an optionally pre-coated substrate

A first subject-matter of the present invention is a method of sealing an optionally pre-coated substrate comprising at least step (2) and optionally also step (1).

The at least one organosilane constituent is at least present - when optional step (1) is not performed - as constituent (a2) in component (A) of the sealing system used for preparing the sealant composition applied in step (2) or is - when step (1) is performed - at least present as a constituent in the primer composition applied in step (1).

Preferably, the organosilane constituent is present in component (A) used for preparing the sealant composition applied in step (2) and is not present in the primer composition optionally applied in step (1). Alternatively, but also preferably, the organosilane constituent is not present in component (A) used for preparing the sealant composition applied in step (2), but is present in the primer composition applied in step (1). In this case step (1) is necessarily performed. Further alternatively, but also preferably, the organosilane constituent is present in component (A) used for preparing the sealant composition applied in step (2) and is also present in the primer composition optionally applied in step (1).

Preferably, the organosilane constituent is present at least in component (A) used for preparing the sealant composition applied in step (2). In particular, the organosilane constituent is present in component (A) used for preparing the sealant composition applied in step (2) and is not present in the primer composition optionally applied in step (1).

### Optional step (1) and primer composition

According to optional step (1) a primer composition is applied at least in portion onto a surface of an optionally pre-coated substrate to form a primer film at least in portion on said surface. Any kind of contacting may be used for performing step (1) such as dipping, brushing and/or spraying.

Optional step (1) preferably is performed with a 1K-compressed air supported cartridge apparatus, with a 1K-low pressure or 1K-high pressure dosing system. It may also be done manually.

Step (1) is preferably performed at a temperature in a range of from 0 to 60 °C, more preferably of from 5 to 45 °C. In particular, no heating is performed.

### Substrate

Suitable substrates are metallic substrates, but also plastic substrates such as polymeric substrates and/or fiber based composites can be used. Preferred substrates are substrates utilizable in the aerospace industry such as fuel tanks. Preferably, the surface to be sealed in this case is the inner surface of a fuel tank.

Suitability as metallic substrates used in accordance with the invention are all substrates used customarily and known to the skilled person. The substrates used in accordance with the invention are preferably metallic substrates including steel substrates. Most preferred, however, are aluminum and/or aluminum alloy substrates.

Preferably, thermoplastic polymers are used in case the substrates are plastic substrates. Suitable polymers are poly(meth)acrylates including polymethyl(meth)acrylates, polybutyl (meth)acrylates, polyethylene terephthalates, polybutylene terephthalates, polyvinylidene fluorides, polyvinyl chlorides, polyesters, including polycarbonates and polyvinyl acetate, polyamides, polyolefins such as polyethylene, polypropylene, polystyrene, and also polybutadiene, polyacrylonitrile, polyacetal, polyacrylonitrile-ethylene-propylene-diene-styrene copolymers (A-EPDM), ASA (acrylonitrile-styrene-acrylic ester copolymers) and ABS (acrylonitrile-butadienestyrene copolymers), polyetherimides, phenolic resins, urea resins, melamine resins, alkyd resins, epoxy resins, polyurethanes, including TPU, polyetherketones, polyphenylene sulfides, polyethers, polyvinyl alcohols, and mixtures thereof. Polycarbonates and poly(meth)acrylates are especially preferred.

However, fiber based composites such as carbon fiber composites may also be used as substrates.

The substrates used may be subjected to a pretreatment leading to a pre-coating. For example, an epoxy based coating may be applied before optional step (1) and step (2) are performed. Preferably, the substrates used bear at least one preferably cured coating layer such as an epoxy based coating layer, before optional step (1) and step (2) are performed.

### Primer composition

At least one organosilane constituent is at least present - when step (1) is performed - at least present as a constituent in the primer composition applied in step (1).

The organosilane constituent contains (i) at least one hydrolyzable group X, (ii) at least one isocyanate group, and (iii) a spacer unit positioned between the at least one hydrolyzable group X and the at least one isocyanate group, wherein said spacer unit comprises the aforementioned at least one moiety MS.

Said organosilane constituent, which can be present in the primer composition applied in step (1), is further described in more detail hereinafter in connection with its optional presence as constituent (a2) in the sealant composition applied in step (2). This relevant disclosure with respect to constituent (a2) similarly applies to the organosilane constituent when it is present in the primer composition.

Preferably, the organosilane constituent - if at least present as a constituent in the primer composition applied in step (1) - is present therein in an amount in a range of from 0.10 to 15.0 wt.-%, preferably of from 0.20 to 12.5 wt.-%, more preferably of from 0.30 to 10.0 wt.-%, even more preferably of from 0.40 to 7.5 wt.-%, still more preferably of from 0.50 to 6.0 wt.-%, in each case based on the total weight of the primer composition.

The primer composition is different from the sealant composition applied in step (2). Preferably, it may contain each of constituents (a3) to (a6) identified and discussed hereinafter in connection with the sealant composition. Preferably, it does not contain any constituent (a1), i.e. it does not contain any polymeric constituents containing two or more thiol groups selected from polyether, polythioether, polysulfide, polythioether-sulfide constituents and mixtures thereof. Preferably, it does not contain any constituent (b) either, and in particular it does not contain any of constituents (b1) to (b4).

Preferably, the primer composition is an organic solvent(s)-based (solventborne, non-aqueous) composition. The term "solventborne" or "non-aqueous" is understood preferably for the purposes of the present invention in this regard to mean that organic solvent(s), as solvent(s) and/or as diluent(s), is/are present as the main constituent of all solvents and/or diluents present in the primer composition. Preferably, organic solvent(s) are present in an amount of at least 35 wt.-%, based on the total weight of the primer composition. A solventborne primer composition preferably includes an organic solvent(s) fraction of at least 40 or 45 wt.-%, more preferably of at least 50 or 55 wt.-%, very preferably of at least 60 or 65 wt.-%, based in each case on the total weight of the composition. All conventional organic solvents known to those skilled in the art can be used as organic solvents. The term "organic solvent" is known to those skilled in the art, in particular from Council Directive 1999/13 / EC of 11 March 1999. Examples of such organic solvents would include heterocyclic, aliphatic, or aromatic hydrocarbons, mono- or polyhydric alcohols, especially ethanol and/or propanol, ethers, esters, ketones, xylene, butanol, ethyl glycol and butyl glycol and also their acetates, butyl diglycol, diethylene glycol dimethyl ether, cyclohexanone, methyl ethyl ketone, methyl isobutyl ketone, acetone, isophorone, or mixtures thereof. A solventborne composition preferably is free or essentially free of water. The term "essentially" in this context preferably means that no water is added on purpose when preparing the composition.

Preferably, the primer composition comprises a non-alcohol organic solvent(s) fraction of at least 40 or 45 wt.-%, more preferably of at least 50 or 55 wt.-%, very preferably of at least 60 wt.-%, based in each case on the total weight of the composition. Most preferred are aromatic hydrocarbons such as xylene and/or aliphatic hydrocarbons such as petrol ether.

Preferably, the primer composition comprises an alcohol organic solvent(s) fraction of 0 to 30 wt.-%, more preferably of 0 or 25 wt.-%, very preferably of 0 to 20 wt.-%, based in each case on the total weight of the composition. Most preferred are isopropylalcohol, butanol and/or methoxypropanol.

Besides the at least one organosilane constituent it may and preferably does contain at least one further adhesion promoting agent such as at least one further organsilane being different from the aforementioned organosilane constituent. Examples are e.g. (3-aminopropyl)trimethoxysilane, (3-aminopropyl)triethoxysilane, N-2-aminoethyl-3-aminopropyltrimethoxysilane, (3-mercaptopropyl)trimethoxysilane, (3-mercaptopropyl)triethoxysilane, (3-glycidyloxypropyl)trimethoxysilane and/or (3-glycidyloxypropyl)triethoxysilane, vinyltrimethoxysilane. Additionally or alternatively, other adhesion promoters may be used, e.g., titanates such as titanium acetylacetonate (TAA) and/or Ti-n-butanolate (TnBt) and/or isopropyl titanate, as well as e.g. zirconates. In case an additional adhesion promoter is present, it is preferably present in the primer composition an amount of from 0 to 7.5 wt.-%, more preferably of from 0 to 6.5 wt.-%, in particular of from 0 to 5.0 wt.-%, based on the total weight of the composition. Most preferably, at least one additional titanate and/or zirconate is present in one of the aforementioned amounts.

### Step (2), sealant composition and sealing system

According to step (2) a sealant composition is applied at least in portion onto a surface of an optionally pre-coated substrate in case optional step (1) is not performed or onto the primer film in case optional step (1) is performed.

Any kind of contacting may be used for performing step (2) such as extrusion brushing and/or spraying. Step (2) is preferably performed at a temperature in a range of from 0 to 60 °C, more preferably of from 5 to 45 °C. In particular, no heating is performed.

Preferably, step (2) is performed with a 2K-compressed air supported cartridge apparatus, with a 2K-low pressure or 2K-high pressure dosing system. It may also be done manually.

### Sealant composition and sealing system

The sealant composition is different from the primer composition optionally applied in step (1) and is obtainable by mixing the components of a sealing system with each other, said sealing system being a two-component (2K) sealing system comprising, preferably consisting of, two components (A) and (B) being separate from each other. For example, components (A) and (B) of the sealing system can be stored separately until they are mixed with each other in order to prepare the sealant composition.

Each of the two components (A) and (B) of the sealing system may contain water and/or at least one organic solvent. However, it is also possible and even preferably if no organic solvents and/or water are present therein.

The amount of water present in component (A) preferably is less than 3.0 wt.-%, more preferably less than 2.0 wt.-%, even more preferably less than 1.0 wt.-%, still more preferably less than 0.5 wt.-%, in each case based on the total weight of component (A).

The amount of water present in component (B) when at least one constituent (b1) and/or at least one constituent (b3) and/or at least one constituent (b4) is present in each case as constituent (b) in (B) preferably is less than 3.0 wt.-%, more preferably less than 2.0 wt.-%, even more preferably less than 1.0 wt.-%, still more preferably less than 0.5 wt.-%, in each case based on the total weight of component (B). Constituents (b1), (b3) and (b4) will be defined hereinafter.

The amount of water present in component (B) when at least one constituent (b2) such as manganese dioxide is present as constituent (b) in (B) preferably is less than 8.5 wt.-%, more preferably less than 7.5 wt.-%, even more preferably less than 7.0 wt.-%, still more preferably less than 6.0 wt.-%, in each case based on the total weight of component (B). Constituent (b2) will be defined hereinafter.

If at least one organic solvent is present therein, organic solvent(s) are preferably present in an amount of up to 70 wt.-% or up to 65 wt.-%, based on the total weight of the sealant composition, in particular when the sealant composition is a sprayable composition. In this case the sealant composition preferably includes an organic solvent(s) fraction of up to 60 wt.-%, based in each case on the total weight of the composition. Alternatively, if at least one organic solvent is present therein, in particular, when the sealant composition is not a sprayable composition, organic solvent(s) are preferably present in an amount of up to 10 wt.-%, based on the total weight of the sealant composition. The sealant composition in this case preferably includes an organic solvent(s) fraction of up to 7.5 wt.-%, more preferably of up to 5 wt.-%, based in each case on the total weight of the composition. All conventional organic solvents known to those skilled in the art can be used as organic solvents. The term "organic solvent" is known to those skilled in the art, in particular from Council Directive 1999/13 / EC of 11 March 1999. Examples of such organic solvents would include heterocyclic, aliphatic, or aromatic hydrocarbons, mono- or polyhydric alcohols, especially ethanol and/or propanol, ethers, esters, ketones, xylene, butanol, ethyl glycol and butyl glycol and also their acetates, butyl diglycol, diethylene glycol dimethyl ether, cyclohexanone, methyl ethyl ketone, methyl isobutyl ketone, acetone, isophorone, or mixtures thereof. The solvents present may be identical or different from one another.

### Component (A)

### Constituent (a1)

Component (A) of the sealing system comprises at least one polymeric constituent (a1) containing two or more thiol groups (mercapto groups) selected from polyether, polythioether, polysulfide, polythioether-sulfide constituents and mixtures thereof, preferably is selected from polythioether, polysulfide, polythioether-sulfide constituents and mixtures thereof, more preferably is selected from polythioether, polysulfide constituents and mixtures thereof, in particular is selected from polysulfide constituents.

The terms "polymer" and "polymeric" are known to the person skilled in the art and, for the purposes of the present invention, encompasses polyadducts and polymerizates as well as polycondensates. The term "polymer" includes both homopolymers and copolymers.

Due to the presence of the thiol groups, (a1) is necessarily a sulfur atoms containing constituent. The thiol groups of (a1) can be chemically reacted with constituent (b) or part of it, e.g. with suitable functional groups thereof. For example, when a constituent (b1) is present as constituent (b) the epoxide groups thereof can be reacted and at least one of hydroxythioether, hydroxythioethersulfide and/or hydroxysulfide moieties are formed. For example, when a constituent (b2) is present as constituent (b) such as contains manganese oxide, S-S-bonds are formed.

Preferably, polymeric constituent (a1) contains terminal thiol groups. Constituent (a1) may be branched or linear. Preferably, polymeric constituent (a1) is liquid at ambient conditions (18 to 23 °C, 50% relative humidity).

Polymeric constituents suitable for use as (a1) are e.g. disclosed in US 2004/097643 A1 and WO 2016/128548 A1 as well as in WO 2015/014876 A2.

If at least one polythioether is used as (a1) it preferably is a liquid (at ambient conditions) polythioether. The polythioether may contain possibly up to about 50 mol-% of disulfide groups within the molecule. The respective polymers may then be named polythioethersulfides. Preferred compounds of this kind are described in WO 2015/014876 A2.

Preferably, polymeric constituent (a1) has a number average molecular weight in a range of from 500 to 10 000 g/mol, more preferably of from 900 to 5000 g/mol. Most preferred is a number average molecular weight in a range of from 2500 to 6 000 g/mol, more preferably of from 3300 to 5000 g/mol, especially when (a1) is at least one polysulfide. Examples for such polymers are e.g. polysulfides commercially available, e.g. under Thioplast^{®} G131, Thioplast^{®} G10, Thioplast^{®} G12, Thiokol^{®} LP 32 and/or Thiokol^{®} LP 12. Preferred is also a polymer constituent (a1) having a number average molecular weight in a range of from 500 to 2 500 g/mol, more preferably of from 700 to 2000 g/mol or 800 to 1200 g/mol. In this case examples for such polymers are e.g. polysulfides commercially available, e.g. under Thiokol^{®} LP3, Thioplast^{®} G4, or Thioplast^{®} G44.

Optionally, at least two kinds of constituents (a1) are present in component (A) having a different number average molecular weight: Long-chain polymers with a number average molecular weight in particular in the range from 2500 to 6000 g/mol, particularly preferably in the range from 3300 to 5000 g/mol, may be present besides short chain polymers with a number average molecular weight in particular in the range from 500 to 2500 g/mol, particularly preferably in the range from 800 to 1500 g/mol. Optionally, at least one of the aforementioned short chain polymers used in combination with the at least one aforementioned long chain polymer may be replaced by at least one polymeric, oligomeric or monomeric mercaptane, which preferably is solid or liquid, having three thiol groups and a number average molecular weight in a range of from 160 to 1200 g/mol. Alternatively, said mercaptane may be further added to the combination of the at least one short chain polymer and the at least one long chain polymer. Examples of such suitable mercaptanes are thiocyanuric acid (1,3,5-triazine-2,4,6-trithiol) and benzene-1,3,5-trithiol (1,3,5-trimercaptobenzene). In case said mercaptane used is non-polymeric, it formally represents a constituent (a6) of component (A). Preferably, said at least one mercaptane - if present - is present in an amount in a range of from 0.05 to 3.0 wt.-%, based on the total weight of component (A).

The sulfur containing polymeric constituents (a1) preferably have a mercaptan content referred to reactive SH-groups with respect to the total weight of (a1) in the range of from 0.5 to 10.0 wt.-%, more preferably of from 0.8 to 8.0 wt.-%, in particular of from 1.2 to 7.0 wt.-%. The mercaptan content can be determined by direct titration of the SH-terminated polymers with an iodine solution: The polymers are dissolved in a solvent mixture composed of 40% in volume of pyridine and 60% in volume of benzene, and are titrated by stirring with a benzene iodine solution, until a weak yellow coloration remains.

Preferably, constituent (a1) has a total sulfur content in the range of from 1 to 50 wt.-%, more preferably of from 5 to 45 wt.-%, in particular of from 12 to 36 wt.-%.

Preferably, constituent (a1) has an average functionality as reactive end groups of mercapto-groups per molecule in the range from 1.5 to 2.5 or from 1.9 to 2.2. The functionality indicates the average number of mercapto groups per molecule. It is calculated as the ratio of molecular weight to equivalent weight and may be determined by NMR.

Preferably, constituent (a1) has an average glass transition temperature T_{g} in the range of from -80 to -30° C or of from -60 to -40° C., measured according to the AITM 1-0003 Airbus Industrie Test Method, June 1995.

Preferably, component (A) and the sealant composition as such are free from any constituents comprising (meth)acrylate groups (methacrylate and/or acrylate groups).

Preferably, constituent (a1) is present in the sealant composition obtained after having mixed components (A) and (B) of the sealing system with each other in an amount in a range of from 50 to 95 wt.-%, based on the total weight of the sealant composition.

### Constituent (a2)

At least one organosilane constituent is at least present - when optional step (1) is not performed - as constituent (a2) in component (A) of the sealing system used for preparing the sealant composition applied in step (2).

Preferably, the organosilane constituent - if at least present as constituent (a2) in component (A) of the sealing system used for preparing the sealant composition applied in step (2) - is present therein in an amount in a range of from 0.05 to 10.0 wt.-%, more preferably of from 0.10 to 7.5 wt.-%, still more preferably of from 0.15 to 7.5 wt.-%, even more preferably of from 0.20 to 5.0 wt.-%, still more preferably of from 0.25 to 4.5 wt.-%, in each case based on the total weight of component (A).

Preferably, the organosilane constituent - if at least present as constituent (a2) in component (A) of the sealing system used for preparing the sealant composition applied in step (2) - is present therein in an amount in a range of from 0.02 to 7.5 wt.-%, preferably of from 0.10 to 7.0 wt.-%, more preferably of from 0.20 to 6.5 wt.-%, even more preferably of from 0.40 to 6.0 wt.-%, still more preferably of from 0.50 to 5.5 wt.-%, in each case based on the total weight of the sealing composition obtainable by mixing at least components (A) and (B) of the sealing system with each other.

The organosilane constituent contains (i) at least one hydrolyzable group X, (ii) at least one isocyanate group, and (iii) a spacer unit positioned between the at least one hydrolyzable group X and the at least one isocyanate group, wherein said spacer unit comprises at least one moiety MS, which comprises at least one sulfur atom and which is preferably selected from the group consisting of thiocarbamate, thiourea, thioester, thioketo, thiourethane and thioamide moieties. Each of the moieties MS is preferably a divalent moiety present within the spacer unit. The term thiocarbamate preferably comprises O-thiocarbamates (-O-C(=S)-N-) and S-thiocarbamates (-S-(C=O)-N-). Preferably, a thiocarbamate moiety is a S-thiocarbamate moiety. Preferably, moiety MS thus at least contains at least one divalent -C(=X)-group, with X being a chalcogen atom selected from oxygen and sulfur. Preferably, the organosilane constituent contains precisely one moiety MS.

Preferably, the organosilane constituent comprises at least two, preferably at least three, hydrolyzable groups X, wherein X preferably is an alkoxy group. The hydrolyzable groups X may each be identical or at least two of these groups may each be different from one another. Preferably, the hydrolyzable groups X are alkoxy groups, in particular C₁-C₄ alkoxy groups. Particularly preferred are methoxy, ethoxy, n-propoxy, iso-propoxy, n-butoxy, sec-butoxy and tert-butoxy groups. Most preferred are ethoxy groups and methoxy groups.

The organosilane constituent can be monomeric, oligomeric or polymeric. Preferably, it is non-polymeric, more preferably monomeric.

Preferably, the at least one organosilane constituent has a number average molecular weight in a range of from 200 to 2000 g/mol, more preferably of from 250 to 1800 g/mol, even more preferably of from 300 to 1500 g/mol, still more preferably of from 350 to 650 g/mol.

Preferably, the spacer unit positioned between the at least one hydrolyzable group X and the at least one isocyanate group and containing the at least one moiety MS is a trivalent or divalent, more preferably divalent, non-hydrolzyable organic residue, which preferably is aliphatic including cycloaliphatic, heteroaliphatic including heterocycloaliphatic and/or aromatic including heteroaromatic. The residue preferably is selected from the group comprising C₁-C₂₀ aliphatic radicals, C₁-C₂₀ heteroaliphatic radicals, C₃-C₂₀ cycloaliphatic radicals, 3-20 membered heterocycloaliphatic radicals, 5-20 membered aryl or heteroaryl radicals, C₃-C₂₀ cycloaliphatic radical bonded via a C₁₋₁₀ aliphatic radical, 3-20-membered heterocycloaliphatic radicals bonded via a C₁₋₁₀-aliphatic radical, 5-20-membered aryl or heteroaryl radicals bonded via a C₁-₁₀-aliphatic radical. The moiety MS is additionally positioned within each of these residues. Preferably, the spacer unit has a chain length separating the at least one hydrolyzable group X and the at least one isocyanate group of at least six carbon and/or heteroatoms, preferably including at least one atom of moiety MS within the chain.

Preferably, the at least one moiety MS of the spacer unit of the organosilane constituent represents a thiocarbamate and/or thiourea moiety. Preferably, a thiocarbamate moiety is a S-thiocarbamate moiety.

Preferably, the at least one organosilane constituent comprises precisely one isocyanate group.

Preferably, the at least one organosilane constituent is preferably obtainable from a reaction of at least one diisocyanate and/or polyisocyanate with at least one organosilane precursor comprising at least one functional group that is reactive towards isocyanate groups, wherein said at least one functional group that is reactive towards isocyanate groups is preferably a thiol group. Diisocyanates have precisely two NCO-groups, whereas polyisocyanates have more than two NCO-groups. Suitable polyisocyanates are e.g. isocyanurates such as isophororone diisocyanate (IPDI) and HMDI (hexamethylene diisocyanate) trimers. Suitable diisocyanates are aliphatic and cycloaliphatic diisocyanates such as isophororone diisocyanate (IPDI) and HMDI (hexamethylene diisocyanate), HMDI and/or IPDI uretdiones and/or allophanates as well as hydrogenated MDI (methylene diphenyl isocyanate). Aromatic diisocyanates such as TDI and XDI are also suitable. However, the use of aliphatic and cycloaliphatic diisocyanates is preferred.

Preferably, the at least one organosilane constituent is preferably obtainable from a reaction of at least one diisocyanate with at least one organosilane precursor comprising at least one functional group that is reactive towards isocyanate groups, wherein said at least one functional group that is reactive towards isocyanate groups is preferably a thiol group, in particular when the at least one diisocyanate and the at least one organosilane precursor are used each in about equimolar amounts. Suitable diisocyanates are aliphatic and cycloaliphatic diisocyanates such as isophororone diisocyanate (IPDI) and HMDI (hexamethylene diisocyanate). Aromatic diisocyanates such as TDI and XDI are also suitable. However, the use of aliphatic and cycloaliphatic diisocyanates is preferred.

Preferably, the at least one organosilane constituent is obtainable from a reaction of at least one preferably aliphatic and/or cycloaliphatic diisocyanate with at least one organosilane precursor comprising at least one thiol group as functional group that is reactive towards isocyanate groups.

The at least one organosilane precursor preferably is a monosilane, which preferably has at least two, particularly preferably three hydrolyzable groups X, and/or is at least one bis(silane), which preferably has at least four, particularly preferably six hydrolyzable groups X.

Preferably, at least one organosilane precursor of general formulae (I) and/or (II) is used for reaction with the at least one diisocyanate,

Si(X)_{4-y}(R)_{y}, (I),

Si(X)_{3-z}(T)_{z}-(RA)-Si(X)_{3-z}(T)_{z} (II),

wherein in the case of general formula (I)
X is each independently a hydrolyzable group, preferably each independently selected from O-C₁₋₄ alkyl,
the parameter y is an integer in the range from 1 to 3 but is at least 1, preferably exactly 1, and
R is a non-hydrolyzable organic radical, wherein at least one of radicals R comprises at least one functional group that is reactive towards isocyanate groups, in particular at least one thiol group,
and wherein in the case of general formula (II)
X represents, in each case independently of one another, a hydrolyzable group and is preferably selected, in each case independently of one another, from O-C₁₋₄-alkyl, RA represents a divalent non-hydrolyzable organic radical, which contains at least one functional group that is reactive towards isocyanate groups, in particular at least one thiol group,
the parameter z is in each case an integer in the range from 0 to 3, preferably in each case 0, and
T is a non-hydrolyzable organic radical which is different from the radical (RA) and preferably has no functional group that is reactive towards isocyanate groups.

### Optional constituents (a3) and (a4)

Component (A) may additionally contain at least one filler (a3) and/or at least one pigment (a4).

The term "filler" is known to the skilled person, from DIN 55943 (date: October 2001), for example. A "filler" for the purposes of the present invention is preferably a constituent, which is substantially, preferably entirely, insoluble in the medium surrounding them, such as each of components (A) and (B) and the sealant composition, for example, and which is used in particular for adjusting the viscosity and thixotropy of the components and the sealant composition, for adjusting the specific density of the cured sealant and/or for increasing the mechanical properties of the cured sealant. "Fillers" in the sense of the present invention differ from "pigments" in their refractive index, which for fillers is < 1.7, while the refractive index for pigments is ≥ 1.7. Preferably, a "filler" for the purposes of the present invention is an inorganic and/or organic filler. Examples of inorganic fillers are chalk and talcum. Examples of organic fillers are powders prepared from temperature resistant polymers such as polyamides, polysulfones, polyphenylene sulfides, polyetherketones and polymeric hollow spheres.

Preferably, the amounts of fillers present in component (A) of the sealing system is in the range of from 0 to 55.0 wt.-%, more preferably in the range of from 0 to 50.0 wt.-%, even more preferably in the range of from 0 to 45.0 wt.-%, still more preferably in the range of from 0 to 40.0 wt.-%, yet more preferably in the range of from 0 to 35.0 wt.-% or of from 0 to 30.0 wt.-%, in particular in the range of from 0 to 25.0 wt.-%, in each case based on the total weight of component (A).

Preferably, the amounts of any pigments present in component (A) of the sealing system is in the range of from 0 to 35.0 wt.-%, more preferably in the range of from 0 to 30.0 wt.-%, even more preferably in the range of from 0 to 25.0 wt.-%, still more preferably in the range of from 0 to 20.0 wt.-%, yet more preferably in the range of from 0 to 15.0 wt.-%, in each case based on the total weight of component (A).

The term "pigment" is known to the skilled person from DIN 55943 (date: October 2001), for example. A "pigment" in the sense of the present invention refers preferably to components in powder or flake form which are substantially, preferably entirely, insoluble in the medium surrounding them, such as each of components (A) and (B) and the sealant composition, for example, and which is a colorant and/or substance which can be used as pigment on account of their magnetic, electrical and/or electromagnetic properties. Preferably, a "pigment" for the purposes of the present invention is an inorganic and/or organic pigment. An example of an inorganic pigment is titanium dioxide.

### Optional constituent (a5)

Component (A) may additionally contain and preferably contains at least one curing catalyst (a5), when component (B) of the sealing system comprises at least one constituent (b1) comprising two or more epoxide groups as constituent (b). Suitable curing catalysts are amines, in particular tertiary amines, amidines and/or guanidines. Examples are 1,4-diazabicyclo(2.2.2)octane, 1,5-diazabicyclo(4.3.0)non-5-ene (DBN) and 1,8-diazabicyclo(5.4.0)undec-7-ene (DBU).

### Further optional constituents (a6)

Component (A) of the sealing system may contain one or more optional constituents (a6).

Constituent (a6) may be a flame retardant such as a phosphorous-containing flame retardants, in particular at least one phosphate ester. If a flame retardant is used, it preferably is liquid (at 1 bar and 23°C). In case a flame retardant is present in component (A), it is preferably present therein in an amount of 0.1 to 30.0 wt.-%, more preferably of 1.0 to 25.0 wt.-%, in particular of 5.0 to 20.0 wt.-%, based on the total weight of component (A).

Constituent (a6) may be a light stabilizer, in particular a UV stabilizers. Examples are for instance sterically hindered amines (HALS: hindered amine light stabilizer). In principle, all commercially available light stabilizers of the Tinuvin^{®} series or from other manufacturers can be used. Liquid light stabilizers are preferred. In case a light stabilizer is present in component (A), it is preferably present therein in an amount of 0.05 to 5.0 wt.-%, more preferably of 0.1 to 3.5 wt.-%, in particular of 0.1 to 2.0 wt.-%, based on the total weight of component (A).

Constituent (a6) may be an additional adhesion promoter besides the aforementioned organosilane constituent. In particular, organosilanes different from constituent (a2) can be used. Examples are e.g. (3-aminopropyl)trimethoxysilane, (3-aminopropyl)triethoxysilane, N-2-aminoethyl-3-aminopropyltrimethoxysilane, (3-mercaptopropyl)trimethoxysilane, (3-mercaptopropyl)triethoxysilane, (3-glycidyloxypropyl)trimethoxysilane and/or (3-glycidyloxypropyl)triethoxysilane, vinyltrimethoxysilane. Additionally or alternatively, other adhesion promoters may be used, e.g., titanates and/or zirconates, such as titanium acetylacetonate (TAA) and/or Ti-n-butanolate (TnBt) and/or isopropyl titanate. In case an additional adhesion promoter is present in component (A), it is preferably present therein in an amount of 0.05 to 5.0 wt.-%, more preferably of 0.1 to 3.5 wt.-%, in particular of 0.1 to 2.0 wt.-%, based on the total weight of component (A).

Constituent (a6) may be an additive selected from the group consisting of defoamers, rheological additives, plasticizers such as phthalates, and viscosity reducers, in particular non-reactive viscosity reducers such as hydrocarbon mixtures based on naphthalene derivatives and/or indene-coumarone resins, tall oil and rapeseed methyl ester (biodiesel) and rapeseed oil and/or other ester-based diluents, as well as mixtures of such additives.. In case at least one additive is present in component (A), it is preferably present therein in an amount of 0.05 to 40.0 wt.-%, more preferably of 0.1 to 30.0 wt.-%, in particular of 0.1 to 20.0 wt.-%, based on the total weight of component (A). Specifically, in case at least one defoamer is present, its amount is preferably in the range of from 0.1 to 2.5 wt.-%, based on the total weight of component (A). Specifically, in case at least one reactive diluent is present, its amount is preferably in the range of from 0.1 to 20.0 wt.-%, based on the total weight of component (A). Specifically, in case at least one rheological additive is present, its amount is preferably in the range of from 0.1 to 5.0 wt.-%, based on the total weight of component (A). Specifically, in case at least one plasticizer is present, its amount is preferably in the range of from 0.1 to 2.5 wt.-%, based on the total weight of component (A). Specifically, in case at least one viscosity reducer is present, its amount is preferably in the range of from 0.1 to 20.0 wt.-%, based on the total weight of component (A).

As outlined hereinbefore in connection with constituent (a1), constituent (a6) may further be at least one non-polymeric mercaptane having three thiol groups and a number average molecular weight in a range of from 160 to 800 g/mol. Preferably, said at least one non-polymeric mercaptane - if present - is present as constituent (a6) in an amount in a range of from 0.05 to 3.0 wt.-%, more preferably of from 0.05 to 1.5 wt.-%, in each case based on the total weight of component (A).

### Component (B) and constituent (b)

Component (B) of the sealing system comprises at least one constituent (b), which is suitable for hardening the sealant composition by at least partially inducing a chemical transformation of the two or more thiol groups of constituent (a1). In other words, constituent (b) or part of it can be chemically reacted with the thiol groups of constituent (a1). Constituent (b) thus represents a curing agent. The resulting chemical transformation may apply to all thiol groups of constituent (a1) or to only part of the thiol groups of constituent (a1). Preferably, however, a chemical transformation is not only induced partially, but substantially to all thiol groups of constituent (a1).

Preferably, the least one constituent (b) is selected from the group consisting of constituents comprising two or more epoxide groups (constituents (b1)), constituents, which are metal oxides and/or metal peroxides, in particular manganese dioxide, (constituents (b2)), constituents, which are organic peroxides (constituents (b3)), constituents comprising two or more vinyl groups (constituents (b4), and mixtures thereof, more preferably is selected from the group consisting of constituents comprising two or more epoxide groups (constituents (b1)), constituents, which are metal oxides and/or metal peroxides, in particular manganese dioxide, (constituents (b2)), and mixtures thereof, in particular represents either at least one constituent comprising two or more epoxide groups as constituent (b1) or represents at least one metal oxide and/or metal peroxide, in particular manganese dioxide, as constituent (b2).

Preferably, constituent (b) is present in component (B) of the sealing system used for preparing the sealant composition applied in step (2) in an amount in a range of from 30 to 100 wt.-%, based on the total weight of component (B).

### Constituent (b1)

Constituent (b1) comprises two or more epoxide groups. Preferably, the epoxide groups are present in (b1) as terminal groups. Constituent (b1) can be monomeric, oligomeric or polymeric. Preferably, (b1) is aliphatic and/or aromatic.

Preferably, constituent (b1) is present in component (B) of the sealing system used for preparing the sealant composition applied in step (2) in an amount in a range of from 50 to 100 wt.-%, based on the total weight of component (B).

Preferably, (b1) has an epoxide functionality of from 2.0 to 5.0, more preferably of from 2.0 to 3.0, in particular of from 2.2 to 2.8.

Constituent (b1) is particularly selected from diglycidyl ethers of bisphenol A, diglycidyl ethers of bisphenol F and aliphatic polyglycol and/or hydantoin epoxy derivatives. Also, epoxy-terminated polythioether or polythioethersulfide and/or epoxidized polysulfides may be used. Particularly preferred is also at least one epoxy-novolac resin (epoxidized phenol formaldehyde resin), preferably a crosslinked epoxy novolac resin. It is also possible that more than constituents (b1) can be used based on several of the abovementioned classes, for example, bisphenol A/F epoxy resin or bisphenol F novolac resin. Component (B) may additionally contain diluting agents in order to adjust the viscosity and flexibility, for example. Examples of diluting agents are 1,4-butanediol diglycidyl ether, 2-ethylhexyl-glycidyl ether and 1,6-hexanediol diglycidyl ether.

Preferably, (b1) is at least one epoxide-terminated polysulfide polymer and/or polythioether polymer and/or polythioethersulfide polymer without terminal mercapto groups, which serves as a curing agent due to its two terminal epoxide groups. This polymer is preferably present as a liquid or highly viscous polymer with an epoxy equivalent weight in particular in the range from 200 to 800 g/eq.

Preferably, the epoxy (epoxide) equivalent weight of (b1) is in the range of from 120 to 800 g/eq, particularly preferably in the range of from 140 to 700 g/eq, and most preferably in the range of from 170 to 400 g/eq.

Most particularly preferred are constituents (b1) based on bisphenol A epoxy resins having an epoxy equivalent weight in the range from 170 to 200 g/eq, based on bisphenol F resin having an epoxy equivalent weight in the range from 150 to 180 g/eq and based on epoxy novolac resins having an epoxy equivalent weight in the range from 160 to 220 g/eq.

Examples of suitable commercial products are e.g. bisphenol F epoxy resins such as DEN 354 (Olin Epoxy), bisphenol A resins such as DER 336, DER 331 (Olin Epoxy), bisphenol A/F epoxy resins such as DER 351, DER 324, DER 335 (Olin Epoxy), epoxy novolac resins such as DEN 431, DEN 438, DEN 439 (Olin Epoxy), epoxy-terminated prepolymers based on polysulfide and/or polythioether such as Thioplast EPS 25 (Akzo Nobel), epoxy-terminated reactive diluents based on alcohol/glycols such as 1,4-butanediol diglycidyl ether (DER 731; Olin Epoxy), and 1,6-hexanediol diglycidyl ether (DER 734; Olin Epoxy).

Preferably, the molar ratio of all constituents (b1) to all constituents (a1) is in a range of from 0.90:1 to 2:1.

### Constituent (b2)

Constituent (b2) is at least one metal oxide and/or metal peroxide, in particular manganese dioxide. Manganese dioxide means manganese (IV) oxide. Another suitable constituent (b2) is calcium peroxide.

Preferably, constituent (b2) is present in component (B) of the sealing system used for preparing the sealant composition applied in step (2) in an amount in a range of from 30 to 90 wt.-%, based on the total weight of component (B).

### Constituent (b3)

Constituent (b3) is at least one organic peroxide. Examples of suitable organic peroxides are organic hydroperoxides such as cumenyl hydroperoxide.

Preferably, constituent (b3) is present in component (B) of the sealing system used for preparing the sealant composition applied in step (2) in an amount in a range of from 30 to 100 wt.-%, based on the total weight of component (B).

### Constituent (b4)

Constituent (b4) comprises two or more vinyl groups. Preferably, the vinyl groups are present in (b4) as terminal groups. Constituent (b4) can be monomeric, oligomeric or polymeric, and preferably is monomeric. Preferably, (b4) is aliphatic and/or aromatic.

Examples of constituent (b4) are divinyl ethers such as diethyleneglycol divinyl ether, triethyleneglycol divinyl ether and butandiol divinyl ether.

Preferably, constituent (b4) is present in component (B) of the sealing system used for preparing the sealant composition applied in step (2) in an amount in a range of from 30 to 100 wt.-%, based on the total weight of component (B).

If constituent (b4) is used as constituent (b) of component (B), it preferably is present in combination with at least one radical generator. Examples of suitable radical generators are 1-hydroxycyclohexyl phenylketone and 2-hydroxy-2-methyl-1-phenylpropane-1-one.

### Optional constituent (b5)

Component (B) of the sealing system may contain one or more optional constituents (b5). Constituent (b5) may be an additive selected from the group consisting of reactive diluents such as such as bis-oxazolidines and/or aldimines, and plasticizers such as phthalates. In particular, at least one plasticizer constituent (b5) is present in component (B), when component (B) of the sealing system comprises at least one constituent (b2), in particular manganese dioxide.

Specifically, in case at least one reactive diluent is present, its amount is preferably in the range of from 0.1 to 20.0 wt.-%, based on the total weight of component (B). Specifically, in case at least one plasticizer is present, its amount is preferably in the range of from 10.0 to 70.0 wt.-%, based on the total weight of component (B).

### Optional constituent (b6)

Component (B) may additionally contain and preferably contains at least one curing catalyst (b6).

As outlined hereinbefore, when component (B) of the sealing system comprises at least one constituent (b1) comprising on turn two or more epoxide groups as constituent (b), at least one curing catalyst if present is preferably present in component (A) as constituent (a5) and is not present in component (B). Suitable curing catalysts in this case are amines, in particular tertiary amines, amidines and/or guanidines. Examples are 1,4-diazabicyclo(2.2.2)octane, 1,5-diazabicyclo(4.3.0)non-5-ene (DBN) and 1,8-diazabicyclo(5.4.0)undec-7-ene (DBU).

When component (B) of the sealing system comprises at least one constituent (b2) as constituent (b), at least one curing catalyst (b6) is preferably present in component (B). Suitable curing catalysts in this case are e.g. tetrabenzylthiuram disulfide, diphenylguanidine, and/or zinc bis(diethyldithiocarbamate).

When component (B) of the sealing system comprises at least one constituent (b3) as constituent (b), at least one curing catalyst (b6) is preferably present in component (B). Suitable curing catalysts in this case are e.g. zinc diethycarbamate.

When component (B) of the sealing system comprises at least one constituent (b4) as constituent (b), at least one curing catalyst (b6) is preferably present in component (B). Suitable curing catalysts in this case are in particular suitable photoinitiators such as acetophenones, benzoin ethers and/or benzoyl oximes. Curing preferably takes place via UV light.

### Optional constituent (b7)

Component (B) may additionally contain at least one flame retardant (b7). Constituent (b7) may be a phosphorous-containing flame retardant, in particular at least one phosphate ester. If a flame retardant is used, it preferably is liquid (at 1 bar and 23°C). In case a flame retardant is present in component (A), it is preferably present therein in an amount of 5.0 to 65.0 wt.-%, more preferably of 25.0 to 65.0 wt.-%, in particular of 40.0 to 65.0 wt.-%, based in each case on the total weight of component (B).

### Optional step (3)

Preferably, the inventive method further comprises a curing step (3), namely (3) curing at least the sealant composition applied in step (2) at ambient temperature (18 to 23°C) or at an elevated temperature such as 80 °C for 0.5 hours to 14 days.

Preferably, curing according to step (3) means chemical curing such as chemical crosslinking, at ambient temperature or at an elevated temperature. In case of using at least one constituent (b1) or (b4) as constituent (b), curing may additionally or alternatively be induced via UV light.

Preferably, the sealant composition is applied in a dry layer thickness in the range of from 15 µm to 20 mm, more preferably of from 50 µm to 15 mm, in particular of from 0.5 to 10 mm.

### Sealed substrate

A further subject-matter of the present invention is a sealed substrate, obtainable by the inventive method.

All preferred embodiments described above herein in connection with the inventive method and the preferred embodiments thereof, are also preferred embodiments of the inventive sealed substrate.

### Use of the organosilane constituent for adhesion enhancement

A further subject-matter of the present invention is a use of an organosilane constituent as defined hereinbefore when incorporated into a primer composition as defined in hereinbefore such as into a primer composition used in step (1) of the inventive method or into a sealant composition as defined hereinbefore such as into a sealant composition used in step (2) of the inventive method, in particular into component (A) of a sealing system used for preparing said sealant composition, for enhancing the adhesion of the primer composition or of the sealant composition to an optionally pre-coated substrate once applied to at least a portion of its surface.

All preferred embodiments described above herein in connection with the inventive method and the inventive sealed substrate and the preferred embodiments thereof, are also preferred embodiments of the inventive use.

### Sealant composition and sealing system

A further subject-matter of the present invention is a sealant composition as defined hereinbefore, which is obtainable by mixing components (A) and (B) of a sealing system as defined hereinbefore with each other, wherein component (A) of said sealing system comprises the at least one organosilane constituent as defined hereinbefore.

The obtained sealing composition may be sprayable, but does not have to be.

Preferably, the sealing composition is obtainable by mixing components (A) and (B) in a weight ratio (component (A)/component (B)) in the range of from 100:1 to 1:1. More preferably, mixing is performed in a weight ratio in the range of from 100:1 to 1.1:1, even more preferably in a weight ratio in the range of from 100:1 to 2:1, in particular in a weight ratio in the range of from 100:1 to 3:1, most preferred in a weight ratio in the range of from 20:1 to 4:1.

A further subject-matter of the present invention is a two-component (2K) sealing system comprising components (A) and (B) as defined hereinbefore, being separate from each other, wherein component (A) of said sealing system comprises the at least one organosilane constituent as defined hereinbefore.

All preferred embodiments described above herein in connection with the inventive method, the inventive sealed substrate and the inventive use and the preferred embodiments thereof, are also preferred embodiments of the inventive sealant composition and the inventive sealing system.

Preferably, the sealing system consists of components (A) and (B).

### Organosilane constituent

A further subject-matter of the present invention is an organosilane constituent as defined hereinbefore, optionally being incorporated into a primer composition as defined hereinbefore.

All preferred embodiments described above herein in connection with the inventive method, the inventive sealed substrate, the inventive use, the inventive sealant composition and the inventive sealing system, and the preferred embodiments thereof, are also preferred embodiments of the inventive organosilane constituent.

### Primer composition

A further subject-matter of the present invention is a primer composition as defined hereinbefore comprising at least the at least one organosilane constituent as defined hereinbefore.

All preferred embodiments described above herein in connection with the inventive method, the inventive sealed substrate, the inventive use, the inventive sealant composition and the inventive sealing system, and the inventive organosilane constituent, and the preferred embodiments thereof, are also preferred embodiments of the inventive primer composition.

### METHODS

### 1. Peel test

The peel test was performed according to AMS-C-27725.

### 2. Immersion test

The immersion test was performed according to AMS 2629 (type 1 for 7 days).

### 3. Number average molecular weight

The number average molecular weight of constituents (a1) and (b1) is determined through GPC (gel permeation chromatography) against polystyrene standards. THF (tetrahydrofurane) is used as a mobile phase. The number average molecular weight of organosilane constituent (a2) is determined through NMR spectroscopy in case of monomeric and oligomeric constituents and is determined via GPC in case of polymeric constituents.

### EXAMPLES

The following examples further illustrate the invention. 'Pbw' means parts by weight. If not defined otherwise, 'parts' means 'parts by weight'.

### 1. Synthesis of NCO-functionalized organosilanes OS1 to OS4

### 1.1 Synthesis of OS1 containing a urea moiety (comparative)

OS1 was prepared by adding IPDI (isophorone diisocyanate) slowly dropwise under stirring to bis[3-(trimethoxysilyl)propyl]amine. IPDI and bis[3-(trimethoxysilyl)propyl]-amine were used in equimolar amounts. The resulting product was used as OS1 without purification.

### 1.2 Synthesis of OS2 containing a S-thiocarbamate moiety (inventive)

OS2 was prepared by heating an equimolar mixture of IPDI and (3-mercaptopropyl)methyldimethoxysilane additionally containing 0.0005 mol 1,4-dimethylpiperazine under stirring under inert gas atmosphere to 75 °C for 4 hours. The resulting product was used as OS2 without purification. OS2 had an NCO-content of 10.2 wt.-%.

### 1.3 Synthesis of OS3 containing a S-thiocarbamate moiety (inventive)

OS3 was prepared by heating an equimolar mixture of HMDI (hexamethylene diisocyanate) and (3-mercaptopropyl)trimethoxysilane additionally containing 0.0005 mol 1,4-dimethylpiperazine under stirring under inert gas atmosphere to 75 °C for 4 hours. The resulting product was used as OS3 without purification. OS3 had an NCO-content of 11.6 wt.-%.

### 1.4 Synthesis of OS4 containing a S-thiocarbamate moiety (inventive)

OS4 was prepared by heating an equimolar mixture of IPDI and (3-mercaptopropyltrimethoxysilane additionally containing 0.0005 mol 1,4-dimethylpiperazine under stirring under inert gas atmosphere to 75 °C for 4 hours. The resulting product was used as OS4 without purification. OS4 had an NCO-content of 9.9 wt.-%.

### 2. Preparation of sealant compositions and of sealed substrates

**2.1** A number of exemplary sealant compositions were prepared. Each of the sealant compositions was prepared from mixing two components (A) and (B) of a two-component sealing system with each other. The composition of component (A) of each of the sealing systems is given in Table 1. Component (A) is prepared from mixing the constituents listed in Table 1 with each other in the order given in Table 1.

**Table 1 - Composition of the "A"-component**

| *Constituent* | *Amount in wt.-%* |
|---|---|
| Thioplast^{®} LP12 | 54.3 |
| Thioplast^{®} LP33 | 18.3 |
| Filler 1 | 22.0 |
| Filler 2 | 1.0 |
| Rheological additive 1 | 2.8 |
| Pigment 1 | 0.1 |
| OS | 1.5 |
| Σ | 100.00 |

Thioplast^{®} LP12 and Thioplast^{®} LP33 are commercially available SH-groups containing polysulfides. Filler 1 and Filler 2 are commercially available fillers. Pigment 1 is a commercially available pigment. Rheological additive 1 is commercially available hydrophobic fumed silica. OS is one of NCO-functionalized organosilanes OS1 to OS4 or one of commercially organosilanes (3-glycidyloxypropyl)trimethoxysilane (COS1) and (3-mercaptopropyl)trimethoxysilane (COS2).

Depending on which of organosilanes OS1 to OS4, COS1 and COS2 has been used, different components "A" of a sealing system were obtained in this manner, namely SC-A-OS1, SC-A-OS2, SC-A-OS3, SC-A-OS4, SC-A-COS1 and SC-A-COS2.

**2.2** 100 parts by weight of each of the components "A" SC-A-OS1, SC-A-OS2, SC-A-OS3, SC-A-OS4, SC-A-COS1 and SC-A-COS2 was mixed with 10 parts by weight of a hardener component "B". Component "B" contains a manganese dioxide hardener. A commercially available product was used as component (B) in each case (Naftoseal^{®} MC 780 B-2 hardener from Chemetall GmbH).

**2.3** After each of the components "A", namely SC-A-OS1, SC-A-OS2, SC-A-OS3, SC-A-OS4, SC-A-COS1 and SC-A-COS2 had been mixed with component "B" the resulting sealant compositions obtained after mixing, namely SC-OS1, SC-OS2, SC-OS3, SC-OS4, SC-COS1 and SC-COS2, were applied in each case to a substrate by applying air pressure to a cartridge. The following substrates S1 to S3 were used:
Substrate S1: aluminum substrate (AL2024),
Substrate S2: aluminum substrate (AL2024) coated with a commercially available basecoat (Mankiewicz Seevenax 313-81),
Substrate S3: aluminum substrate (AL2024) coated with a commercially available integral fuel tank coating (DeSoto 823-707).

After having been applied to one of the substrates the applied sealant compositions were cured for 14 days at room temperature (23 °C) and 50% relative humidity. The sealed substrates were then subjected to a number of tests as it will be outlined hereinafter.

### 3. Investigation of properties of sealed substrates

### 3.1 Sealants applied on surface of substrate S1

Some properties of the sealed and cured substrates have been investigated. The measurements have been performed according to the methods disclosed in the 'methods' section. The results are displayed in Table 3.1.

**Table 3.1 Sealants applied on S1**

| | *Sealant SC-OS1* | *Sealant SC-OS2* | *Sealant SC-OS3* | *Sealant SC-OS4* | *Sealant SC-COS1* | *Sealant SC-COS2* |
|---|---|---|---|---|---|---|
| Peel test after 14 d [N/25 mm] | 22±4 | 402±17 | 257±48 | 375±28 | 10±4 | 19±2 |
| Fracture mode cohesive [%] | 0 | 100 | 100 | 100 | 10 | 0 |

### 3.2 Sealants applied on surface of substrate S2

Some properties of the sealed and cured substrates have been investigated. The measurements have been performed according to the methods disclosed in the 'methods' section. The results are displayed in Table 3.2.

**Table 3.2 Sealants applied on S2**

| | *Sealant SC-OS1* | *Sealant SC-OS2* | *Sealant SC-OS3* | *Sealant SC-OS4* | *Sealant SC-COS1* | *Sealant SC-COS2* |
|---|---|---|---|---|---|---|
| Peel test after 14 d [N/25 mm] | 34±4 | 385±20 | 227±16 | 379±15 | 24±6 | 84±47 |
| Fracture mode cohesive [%] | 0 | 100 | 100 | 100 | 24 | 20 |

### 3.3 Sealants applied on surface of substrate S3

Some properties of the sealed and cured substrates have been investigated. The measurements have been performed according to the methods disclosed in the 'methods' section. The results are displayed in Table 3.3.

**Table 3.3 Sealants applied on S3**

| | *Sealant SC-OS1* | *Sealant SC-OS2* | *Sealant SC-OS3* | *Sealant SC-OS4* | *Sealant SC-COS1* | *Sealant SC-COS2* |
|---|---|---|---|---|---|---|
| Peel test after 14 d [N/25 mm] | 272±10 | 405±15 | 269±12 | 418±14 | 253±30 | 178±38 |
| Fracture mode cohesive [%] | 100 | 100 | 100 | 100 | 100 | 92 |
| Peel test after 14 d at 60 °C type 1 rev. fuel immersion [N/25 mm] | 230±20 | 297±19 | 216±8 | 329±11 | 218±31 | 156±4 |
| Fracture mode cohesive [%] | 100 | 100 | 100 | 100 | 100 | 100 |

## Claims

1. A method of sealing an optionally pre-coated substrate comprising at least step (2) and optionally also step (1), namely
(1) optionally applying a primer composition at least in portion onto a surface of an optionally pre-coated substrate to form a primer film at least in portion on said surface,
(2) applying a sealant composition at least in portion onto a surface of an optionally pre-coated substrate in case optional step (1) is not performed or onto the primer film in case optional step (1) is performed,
wherein the sealant composition is different from the primer composition optionally applied in step (1) and is obtainable by mixing the components of a sealing system with each other, said sealing system being a two-component (2K) sealing system comprising two components (A) and (B) being separate from each other,
wherein component (A) of the sealing system comprises at least one polymeric constituent (a1) containing two or more thiol groups selected from polyether, polythioether, polysulfide, polythioether-sulfide constituents and mixtures thereof, and
wherein component (B) of the sealing system comprises at least one constituent (b), which is suitable for hardening the sealant composition by at least partially inducing a chemical transformation of the two or more thiol groups of constituent (a1),
**characterized in that** at least one organosilane constituent, which contains
(i) at least one hydrolyzable group X,
(ii) at least one isocyanate group, and
(iii) a spacer unit positioned between the at least one hydrolyzable group X and the at least one isocyanate group, wherein said spacer unit comprises at least one moiety MS, which comprises at least one sulfur atom,
is at least present - when optional step (1) is not performed - as constituent (a2) in component (A) of the sealing system used for preparing the sealant composition applied in step (2) or is - when step (1) is performed - at least present as a constituent in the primer composition applied in step (1).

2. The method according to claim 1, **characterized in that** the at least one organosilane constituent is present at least in component (A) used for preparing the sealant composition applied in step (2).

3. The method according to claim 1 or 2, **characterized in that** the at least one organosilane constituent - if at least present as constituent (a2) in component (A) of the sealing system used for preparing the sealant composition applied in step (2) - is present therein in an amount in a range of from 0.05 to 10.0 wt.-%, preferably of from 0.10 to 7.5 wt.-%, more preferably of from 0.15 to 7.5 wt.-%, even more preferably of from 0.20 to 5.0 wt.-%, still more preferably of from 0.25 to 4.5 wt.-%, in each case based on the total weight of component (A) of the sealing system or - if at least present as a constituent in the primer composition applied in step (1) - is present therein in an amount in a range of from 0.10 to 15.0 wt.-%, preferably of from 0.20 to 12.5 wt.-%, more preferably of from 0.30 to 10.0 wt.-%, even more preferably of from 0.40 to 7.5 wt.-%, still more preferably of from 0.50 to 6.0 wt.-%, in each case based on the total weight of the primer composition.

4. The method according to one or more of the preceding claims, **characterized in that** the at least one moiety MS, which comprises at least one sulfur atom, of the spacer unit of the organosilane constituent is selected from the group consisting of thiocarbamate, thiourea, thioester, thioketo, thiourethane and thioamide moieties, preferably represents a thiocarbamate, thiourethane, and/or thiourea moiety.

5. The method according to one or more of the preceding claims, **characterized in that** the at least one organosilane constituent comprises precisely one isocyanate group.

6. The method according to one or more of the preceding claims, **characterized in that** the at least one organosilane constituent is obtainable from a reaction of at least one preferably aliphatic and/or cycloaliphatic diisocyanate with at least one organosilane precursor comprising at least one thiol group as a functional group that is reactive towards isocyanate groups, in particular when the at least one diisocyanate and the at least one organosilane precursor are used each in about equimolar amounts.

7. The method according to one or more of the preceding claims, **characterized in that** the at least one organosilane constituent is monomeric, preferably wherein the spacer unit has a chain length separating the at least one hydrolyzable group X and the at least one isocyanate group of at least six carbon and/or heteroatoms, preferably including at least one atom of moiety MS within said chain.

8. The method according to one or more of the preceding claims, **characterized in that** the organosilane constituent comprises at least two, preferably at least three hydrolyzable groups X, wherein X preferably is an alkoxy group having 1 to 4 carbon atoms.

9. The method according to one or more of the preceding claims, **characterized in that** the at least one organosilane constituent is obtainable from a reaction of at least one preferably aliphatic and/or cycloaliphatic diisocyanate with at least one organosilane precursor of general formulae (I) and/or (II), namely
Si(X)_{4-y}(R)_{y}, (I),
Si(X)_{3-z}(T)_{z}-(RA)-Si(X)_{3-z}(T)_{z} (II),
wherein in the case of general formula (I)
X is each independently a hydrolyzable group, preferably each independently selected from O-C₁₋₄ alkyl,
the parameter y is an integer in the range from 1 to 3 but is at least 1, preferably exactly 1, and
R is a non-hydrolyzable organic radical, wherein at least one of radicals R comprises at least one functional group that is reactive towards isocyanate groups,
and wherein in the case of general formula (II)
X represents, in each case independently of one another, a hydrolyzable group and is preferably selected, in each case independently of one another, from O-C₁₋₄-alkyl,
RA represents a divalent non-hydrolyzable organic radical, which contains at least one functional group that is reactive towards isocyanate groups,
the parameter z is in each case an integer in the range from 0 to 3, preferably in each case 0, and
T is a non-hydrolyzable organic radical which is different from the radical (RA) and preferably has no functional group that is reactive towards isocyanate groups.

10. The method according to one or more of the preceding claims, **characterized in that** the at least one constituent (b), which is present in component (B) and is suitable for hardening the sealant composition, is selected from the group consisting of constituents comprising two or more epoxide groups (constituents (b1)), constituents, which are metal oxides and/or metal peroxides, in particular manganese dioxide, (constituents (b2)), constituents, which are organic peroxides (constituents (b3)), constituents comprising two or more vinyl groups (constituents (b4)), and mixtures thereof, preferably is selected from the group consisting of constituents comprising two or more epoxide groups (constituents (b1)), constituents, which are metal oxides and/or metal peroxides, in particular manganese dioxide, (constituents (b2)), and mixtures thereof, in particular represents either at least one constituent comprising two or more epoxide groups as constituent (b1) or represents at least one metal oxide and/or metal peroxide, in particular manganese dioxide, as constituent (b2).

11. A sealed substrate, obtainable by the method according to one or more of claims 1 to 10.

12. A use of an organosilane constituent as defined in one or more of claims 1 to 10 when incorporated into a primer composition as defined in one or more of claims 1 to 10 or into a sealant composition as defined in one or more of claims 1 to 10 for enhancing the adhesion of the primer composition or of the sealant composition to an optionally pre-coated substrate once applied to at least a portion of its surface.

13. A sealant composition as defined in one or more of claims 1 to 10, which is obtainable by mixing components (A) and (B) of a sealing system as defined in one or more of claims 1 to 10 or as defined in claim 14 with each other, wherein component (A) of said sealing system comprises the at least one organosilane constituent as defined in one or more claims 1 to 10.

14. A two-component (2K) sealing system comprising components (A) and (B) as defined in one or more of claims 1 to 10, being separate from each other, wherein component (A) of said sealing system comprises the at least one organosilane constituent as defined in one or more claims 1 to 10.

15. An organosilane constituent as defined in one or more of claims 1 to 10, optionally being incorporated into a primer composition as defined in one or more of claims 1 to 10.

## Patentansprüche

1. Verfahren zum Versiegeln eines gegebenenfalls vorbeschichteten Substrats, umfassend mindestens Schritt (2) und gegebenenfalls auch Schritt (1), nämlich
(1) gegebenenfalls zumindest teilweises Aufbringen einer Grundierungszusammensetzung auf eine Oberfläche eines gegebenenfalls vorbeschichteten Substrats zur zumindest teilweisen Bildung eines Grundierungsfilms auf der Oberfläche,
(2) zumindest teilweises Aufbringen einer Versiegelungsmittelzusammensetzung auf eine Oberfläche eines gegebenenfalls vorbeschichteten Substrats in dem Fall, dass der fakultative Schritt (1) nicht durchgeführt wird, oder auf den Grundierungsfilm in dem Fall, dass der fakultative Schritt (1) durchgeführt wird,
wobei die Versiegelungsmittelzusammensetzung von der gegebenenfalls in Schritt (1) aufgebrachten Grundierungszusammensetzung verschieden ist und durch Mischen der Komponenten eines Versiegelungssystems miteinander erhältlich ist, wobei es sich bei dem Versiegelungssystem um ein Zweikomponenten(2K)-Versiegelungssystem handelt, das zwei voneinander getrennte Komponenten (A) und (B) umfasst,
wobei Komponente (A) des Versiegelungssystems mindestens einen Polymerbestandteil (a1) mit zwei oder mehr Thiolgruppen umfasst, der aus Polyether-, Polythioether-, Polysulfid- und Polythioethersulfid-Bestandteilen und Mischungen davon ausgewählt ist, und
wobei Komponente (B) des Versiegelungssystems mindestens einen Bestandteil (b) umfasst, der zum Härten der Versiegelungsmittelzusammensetzung durch zumindest teilweises Induzieren einer chemischen Transformation der zwei oder mehr Thiolgruppen von Bestandteil (a1) geeignet ist,
**dadurch gekennzeichnet, dass** mindestens ein OrganosilanBestandteil, der
(i) mindestens eine hydrolysierbare Gruppe X,
(ii) mindestens eine Isocyanatgruppe und
(iii) eine Spacereinheit, die zwischen der mindestens einen hydrolysierbaren Gruppe X und der mindestens einen Isocyanatgruppe angeordnet ist, wobei die Spacereinheit mindestens eine Gruppierung MS umfasst, die mindestens ein Schwefelatom umfasst,
enthält, dann, wenn der fakultative Schritt (1) nicht durchgeführt wird, zumindest als Bestandteil (a2) in Komponente (A) des zur Herstellung der in Schritt (2) aufgebrachten Versiegelungsmittelzusammensetzung verwendeten Versiegelungssystems vorliegt oder dann, wenn Schritt (1) durchgeführt wird, zumindest als Bestandteil in der in Schritt (1) aufgebrachten Grundierungszusammensetzung vorliegt.

2. Verfahren nach Anspruch 1, **dadurch gekennzeichnet, dass** der mindestens eine Organosilan-Bestandteil zumindest in der zur Herstellung der in Schritt (2) aufgebrachten Versiegelungsmittelzusammensetzung verwendeten Komponente (A) vorliegt.

3. Verfahren nach Anspruch 1 oder 2, **dadurch gekennzeichnet, dass** der mindestens eine Organosilanbestandteil - sofern er zumindest als Bestandteil (a2) in Komponente (A) des zur Herstellung der in Schritt (2) aufgebrachten Versiegelungsmittelzusammensetzung verwendeten Versiegelungssystems vorliegt - darin in einer Menge in einem Bereich von 0,05 bis 10,0 Gew.-%, bevorzugt von 0,10 bis 7,5 Gew.-%, weiter bevorzugt von 0,15 bis 7,5 Gew.-%, noch weiter bevorzugt von 0,20 bis 5,0 Gew.-%, noch weiter bevorzugt von 0,25 bis 4,5 Gew.-%, jeweils bezogen auf das Gesamtgewicht der Komponente (A) des Versiegelungssystems, vorliegt oder - wenn er zumindest als Bestandteil in der in Schritt (1) aufgebrachten Grundierungszusammensetzung vorliegt - darin in einer Menge im Bereich von 0,10 bis 15,0 Gew.-%, bevorzugt von 0,20 bis 12,5 Gew.-%, weiter bevorzugt von 0,30 bis 10,0 Gew.-%, noch weiter bevorzugt von 0,40 bis 7,5 Gew.-%, noch weiter bevorzugt von 0,50 bis 6,0 Gew.-%, jeweils bezogen auf das Gesamtgewicht der Grundierungszusammensetzung, vorliegt.

4. Verfahren nach einem oder mehreren der vorhergehenden Ansprüche, **dadurch gekennzeichnet, dass** die mindestens eine Gruppierung MS, die mindestens ein Schwefelatom umfasst, der Spacereinheit des Organosilan-Bestandteils aus der Gruppe bestehend aus Thiocarbamat-, Thioharnstoff-, Thioester-, Thioketo-, Thiourethan- und Thioamidgruppierungen ausgewählt ist und vorzugsweise für eine Thiocarbamat-, Thiourethan- und/oder Thioharnstoffgruppierung steht.

5. Verfahren nach einem oder mehreren der vorhergehenden Ansprüche, **dadurch gekennzeichnet, dass** der mindestens eine Organosilan-Bestandteil genau eine Isocyanatgruppe umfasst.

6. Verfahren nach einem oder mehreren der vorhergehenden Ansprüche, **dadurch gekennzeichnet, dass** der mindestens eine Organosilan-Bestandteil aus einer Reaktion mindestens eines vorzugsweise aliphatischen und/oder cycloaliphatischen Diisocyanats mit mindestens einem Organosilan-Vorläufer, der mindestens eine Thiolgruppe als gegenüber Isocyanatgruppen reaktive funktionelle Gruppe umfasst, erhältlich ist, insbesondere wenn das mindestens eine Diisocyanat und der mindestens eine Organosilan-Vorläufer jeweils in etwa äquimolaren Mengen verwendet werden.

7. Verfahren nach einem oder mehreren der vorhergehenden Ansprüche, **dadurch gekennzeichnet, dass** der mindestens eine Organosilan-Bestandteil monomer ist, vorzugsweise wobei die Spacereinheit eine die mindestens eine hydrolysierbare Gruppe X und die mindestens eine Isocyanatgruppe trennende Kettenlänge von mindestens sechs Kohlenstoff- und/oder Heteroatomen aufweist, wobei vorzugsweise mindestens ein Atom der Gruppierung MS in der Kette enthalten ist.

8. Verfahren nach einem oder mehreren der vorhergehenden Ansprüche, **dadurch gekennzeichnet, dass** der Organosilanbestandteil mindestens zwei, vorzugsweise mindestens drei, hydrolysierbare Gruppen X umfasst, wobei X vorzugsweise für eine Alkoxygruppe mit 1 bis 4 Kohlenstoffatomen steht.

9. Verfahren nach einem oder mehreren der vorhergehenden Ansprüche, **dadurch gekennzeichnet, dass** der mindestens eine Organosilan-Bestandteil aus einer Reaktion mindestens eines vorzugsweise aliphatischen und/oder cycloaliphatischen Diisocyanats mit mindestens einem Organosilan-Vorläufer der allgemeinen Formeln (I) und/oder (II) erhältlich ist, nämlich
Si(X)_{4-y}(R)_{y}, (I),
Si(X)_{3-z}(T)_{z}-(RA)-Si(X)_{3-z}(T)_{z} (II),
wobei im Fall der allgemeinen Formel (I)
X jeweils unabhängig für eine hydrolysierbare Gruppe steht, die vorzugsweise jeweils unabhängig aus O-C₁₋₄-Alkyl ausgewählt ist,
der Parameter y für eine ganze Zahl im Bereich von 1 bis 3, aber mindestens für 1, vorzugsweise genau 1, steht und R für einen nicht hydrolysierbaren organischen Rest steht, wobei mindestens einer der Reste R mindestens eine gegenüber Isocyanatgruppen reaktive funktionelle Gruppe umfasst,
und wobei im Fall der allgemeinen Formel (II)
X jeweils unabhängig voneinander für eine hydrolysierbare Gruppe steht und vorzugsweise jeweils unabhängig voneinander aus O-C₁₋₄-Alkyl ausgewählt ist,
RA für einen zweiwertigen nicht hydrolysierbaren organischen Rest steht, der mindestens eine gegenüber Isocyanatgruppen reaktive funktionelle Gruppe enthält,
der Parameter z jeweils für eine ganze Zahl im Bereich von 0 bis 3, vorzugsweise jeweils 0, steht und
T für einen nicht hydrolysierbaren organischen Rest steht, der von dem Rest (RA) verschieden ist und vorzugsweise keine gegenüber Isocyanatgruppen reaktive funktionelle Gruppe aufweist.

10. Verfahren nach einem oder mehreren der vorhergehenden Ansprüche, **dadurch gekennzeichnet, dass** der mindestens eine Bestandteil (b), der in der Komponente (B) vorliegt und zur Härtung der Versiegelungsmittelzusammensetzung geeignet ist, aus der Gruppe bestehend aus Bestandteilen mit zwei oder mehr Epoxidgruppen (Bestandteilen (b1)), Bestandteilen, bei denen es sich um Metalloxide und/oder Metallperoxide, insbesondere Mangandioxid, handelt (Bestandteilen (b2)), Bestandteilen, bei denen es sich um organische Peroxide handelt (Bestandteilen (b3)), Bestandteilen mit zwei oder mehr Vinylgruppen (Bestandteilen (b4)) und Mischungen davon ausgewählt ist und vorzugsweise aus der Gruppe bestehend aus Bestandteilen mit zwei oder mehr Epoxidgruppen (Bestandteilen (b1)), Bestandteilen, bei denen es sich um Metalloxide und/oder Metallperoxide, insbesondere Mangandioxid, handelt (Bestandteilen (b2)), und Mischungen davon ausgewählt ist insbesondere entweder mindestens einen Bestandteil mit zwei oder mehr Epoxidgruppen als Bestandteil (b1) repräsentiert oder mindestens ein Metalloxid und/oder Metallhydroxid, insbesondere Mangandioxid, als Bestandteil (b2) repräsentiert.

11. Beschichtetes Substrat, erhältlich durch das Verfahren nach einem der Ansprüche 1 bis 10.

12. Verwendung eines Organosilan-Bestandteils gemäß einem oder mehreren der Ansprüche 1 bis 10, wenn er in eine Grundierungszusammensetzung gemäß in einem oder mehreren der Ansprüche 1 bis 10 oder in eine Versiegelungsmittelzusammensetzung gemäß einem oder mehreren der Ansprüche 1 bis 10 eingearbeitet wird, zur Verbesserung der Haftung der Grundierungszusammensetzung bzw. der Versiegelungsmittelzusammensetzung an einem gegebenenfalls vorbeschichteten Substrat nach Aufbringen auf mindestens einen Teil seiner Oberfläche.

13. Versiegelungsmittelzusammensetzung nach einem oder mehreren der Ansprüche 1 bis 10, die durch Mischen der Komponenten (A) und (B) eines Versiegelungssystems gemäß einem oder mehreren der Ansprüche 1 bis 10 oder gemäß Anspruch 14 miteinander erhältlich ist, wobei die Komponente (A) des Versiegelungssystems den mindestens einen Organosilan-Bestandteil gemäß einem oder mehreren der Ansprüche 1 bis 10 umfasst.

14. Zweikomponenten(2K)-Versiegelungssystem, umfassend die Komponenten (A) und (B) gemäß einem oder mehreren der Ansprüche 1 bis 10, die voneinander getrennt sind, wobei die Komponente (A) des Dichtungssystems den mindestens einen Organosilan-Bestandteil gemäß einem oder mehreren der Ansprüche 1 bis 10 umfasst.

15. Organosilan-Bestandteil gemäß einem oder mehreren der Ansprüche 1 bis 10, gegebenenfalls eingearbeitet in eine Grundierungszusammensetzung gemäß einem oder mehreren der Ansprüche 1 bis 10.

## Revendications

1. Procédé de scellement d'un substrat éventuellement pré-revêtu comprenant au moins l'étape (2) et éventuellement également l'étape (1), à savoir
(1) éventuellement appliquer une composition d'apprêt au moins en partie sur une surface d'un substrat éventuellement pré-revêtu pour former un film d'apprêt au moins en partie sur ladite surface,
(2) appliquer une composition d'agent de scellement au moins en partie sur une surface d'un substrat éventuellement pré-revêtu si l'étape éventuelle (1) n'est pas réalisée ou sur le film d'apprêt si l'étape éventuelle (1) est réalisée,
dans lequel la composition d'agent de scellement est différente de la composition d'apprêt éventuellement appliquée à l'étape (1) et peut être obtenue en mélangeant les composants d'un système de scellement les uns avec les autres, ledit système de scellement étant un système de scellement à deux composants (2K) comprenant deux composants (A) et (B) qui sont distincts l'un de l'autre,
dans lequel le composant (A) du système de scellement comprend au moins un constituant polymérique (a1) contenant au moins deux groupes thiol choisis parmi les constituants polyéther, polythioéther, polysulfure, polythioéther-sulfure et leurs mélanges, et
dans lequel le composant (B) du système de scellement comprend au moins un constituant (b), qui est approprié pour durcir la composition d'agent de scellement par induction au moins partielle d'une transformation chimique des deux ou plusieurs groupes thiol du constituant (a1),
**caractérisé en ce qu'**au moins un constituant organosilane, qui contient
(i) au moins un groupe hydrolysable X,
(ii) au moins un groupe isocyanate, et
(iii) un motif espaceur positionné entre l'au moins un groupe hydrolysable X et l'au moins un groupe isocyanate, dans lequel ledit motif espaceur comprend au moins un fragment MS, qui comprend au moins un atome de soufre,
est au moins présent - lorsque l'étape éventuelle (1) n'est pas réalisée - en tant que constituant (a2) dans le composant (A) du système de scellement utilisé pour préparer la composition d'agent de scellement appliquée à l'étape (2) ou est - lorsque l'étape (1) est réalisée - au moins présent en tant que constituant dans la composition d'apprêt appliquée à l'étape (1).

2. Procédé selon la revendication 1, **caractérisé en ce que** l'au moins un constituant organosilane est présent au moins dans le composant (A) utilisé pour la préparation de la composition d'agent de scellement appliquée dans l'étape (2).

3. Procédé selon la revendication 1 ou 2, **caractérisé en ce que** l'au moins un constituant organosilane - s'il est présent au moins en tant que constituant (a2) dans le composant (A) du système de scellement utilisé pour la préparation de la composition d'agent de scellement appliquée dans l'étape (2) - y est présent en une quantité dans une plage de 0,05 à 10,0 % en poids, de préférence de 0,10 à 7,5 % en poids, plus préférablement de 0,15 à 7,5 % en poids, encore plus préférablement de 0,20 à 5,0 % en poids, encore plus préférablement de 0,25 à 4,5 % en poids, en chaque cas par rapport au poids total du composant (A) du système de scellement ou - s'il est au moins présent en tant que constituant dans la composition d'apprêt appliquée à l'étape (1) - y est présent en une quantité dans une plage de 0,10 à 15,0 % en poids, de préférence de 0,20 à 12,5 % en poids, plus préférablement de 0,30 à 10,0 % en poids, encore plus préférablement de 0,40 à 7,5 % en poids, encore plus préférablement de 0,50 à 6,0 % en poids, en chaque cas par rapport au poids total de la composition d'apprêt.

4. Procédé selon une ou plusieurs des revendications précédentes, **caractérisé en ce que** l'au moins un fragment MS, qui comprend au moins un atome de soufre, du motif espaceur du constituant organosilane est choisi dans le groupe constitué par les fragments thiocarbamate, thiourée, thioester, thiocéto, thiouréthane et thioamide, représente de préférence un fragment thiocarbamate, thiouréthane et/ou thiourée.

5. Procédé selon une ou plusieurs des revendications précédentes, **caractérisé en ce que** l'au moins un constituant organosilane comprend précisément un groupe isocyanate.

6. Procédé selon une ou plusieurs des revendications précédentes, **caractérisé en ce que** l'au moins un constituant organosilane peut être obtenu à partir d'une réaction d'au moins un diisocyanate de préférence aliphatique et/ou cycloaliphatique avec au moins un précurseur d'organosilane comprenant au moins un groupe thiol en tant que groupe fonctionnel réactif vis-à-vis de groupes isocyanates, en particulier lorsque l'au moins un diisocyanate et l'au moins un précurseur d'organosilane sont utilisés chacun en quantités approximativement équimolaires.

7. Procédé selon une ou plusieurs des revendications précédentes, **caractérisé en ce que** l'au moins un constituant organosilane est monomérique, de préférence dans lequel le motif espaceur a une longueur de chaîne séparant l'au moins un groupe hydrolysable X et l'au moins un groupe isocyanate d'au moins six carbones et/ou hétéroatomes, de préférence comprenant au moins un atome de fragment MS dans ladite chaîne.

8. Procédé selon une ou plusieurs des revendications précédentes, **caractérisé en ce que** le constituant organosilane comprend au moins deux, de préférence au moins trois groupes hydrolysables X, X étant de préférence un groupe alcoxy ayant 1 à 4 atomes de carbone.

9. Procédé selon une ou plusieurs des revendications précédentes, **caractérisé en ce que** l'au moins un constituant organosilane peut être obtenu à partir d'une réaction d'au moins un diisocyanate de préférence aliphatique et/ou cycloaliphatique avec au moins un précurseur d'organosilane de formules générales (I) et/ou (II), à savoir
Si(X)_{4-y}(R)_{y}, (I),
Si(X)_{3-z}(T)_{z}-(RA)-Si(X)_{3-z}(T)_{z} (II),
dans lesquelles, dans le cas de la formule générale (I)
X est chacun indépendamment un groupe hydrolysable, de préférence chacun indépendamment choisi parmi O-C₁₋₄ alkyle,
le paramètre y est un nombre entier dans la plage de 1 à 3 mais est au moins 1, de préférence exactement 1, et
R est un radical organique non hydrolysable, dans lesquelles au moins un des radicaux R comprend au moins un groupe fonctionnel qui est réactif vis-à-vis de groupes isocyanates,
et dans lesquelles, dans le cas de la formule générale (II)
X représente, en chaque cas indépendamment les uns des autres, un groupe hydrolysable et est choisi de préférence, en chaque cas indépendamment les uns des autres, parmi O-C₁₋₄-alkyle,
RA représente un radical organique divalent non hydrolysable, qui contient au moins un groupe fonctionnel qui est réactif vis-à-vis de groupes isocyanates,
le paramètre z est en chaque cas un nombre entier dans la plage de 0 à 3, de préférence en chaque cas 0, et
T est un radical organique non hydrolysable différent du radical (RA) et de préférence dépourvu de groupe fonctionnel qui est réactif vis-à-vis des groupes isocyanates.

10. Procédé selon l'une ou plusieurs des revendications précédentes, **caractérisé en ce que** l'au moins un constituant (b), qui est présent dans le composant (B) et est approprié pour durcir la composition d'agent de scellement, est choisi dans le groupe constitué par des constituants comprenant au moins deux groupes époxyde (constituants (b1)), des constituants, qui sont des oxydes métalliques et/ou des peroxydes métalliques, en particulier le dioxyde de manganèse, (constituants (b2)), des constituants, qui sont des peroxydes organiques (constituants (b3)), des constituants comprenant au moins deux groupes vinyle (constituants (b4)), et leurs mélanges, de préférence est choisi dans le groupe constitué par des constituants comprenant au moins deux groupes époxyde (constituants (b1)), des constituants, qui sont des oxydes métalliques et/ou des peroxydes métalliques, en particulier le dioxyde de manganèse, (constituants (b2)), et leurs mélanges, en particulier représente soit au moins un constituant comprenant au moins deux groupes époxyde en tant que constituant (b1) ou représente au moins un oxyde métallique et/ou peroxyde métallique, en particulier le dioxyde de manganèse, en tant que constituant (b2).

11. Substrat scellé, pouvant être obtenu par le procédé selon l'une ou plusieurs des revendications 1 à 10.

12. Utilisation d'un constituant organosilane tel que défini dans une ou plusieurs des revendications 1 à 10 lorsqu'il est incorporé dans une composition d'apprêt telle que définie dans une ou plusieurs des revendications 1 à 10 ou dans une composition d'agent de scellement telle que définie dans une ou plusieurs des revendications 1 à 10 pour améliorer l'adhérence de la composition d'apprêt ou de la composition d'agent de scellement à un substrat éventuellement pré-revêtu une fois appliqué sur au moins une partie de sa surface.

13. Composition d'agent de scellement selon une ou plusieurs des revendications 1 à 10, qui peut être obtenue en mélangeant les composants (A) et (B) d'un système de scellement tel que défini dans une ou plusieurs des revendications 1 à 10 ou tel que défini dans la revendication 14 les uns avec les autres, dans laquelle le composant (A) dudit système de scellement comprend l'au moins un composant organosilane selon une ou plusieurs des revendications 1 à 10.

14. Système de scellement à deux composants (2K) comprenant les composants (A) et (B) tels que définis dans une ou plusieurs des revendications 1 à 10, qui sont distincts l'un de l'autre, dans lequel le composant (A) dudit système de scellement comprend l'au moins un composant organosilane tel que défini dans une ou plusieurs des revendications 1 à 10.

15. Constituant organosilane tel que défini dans une ou plusieurs des revendications 1 à 10, éventuellement incorporé dans une composition d'apprêt telle que définie dans une ou plusieurs des revendications 1 à 10.
